# EUROPÄISCHE PATENTSCHRIFT

(11) **EP 3 260 257 B1**
(45) Veröffentlichungstag und Bekanntmachung des Hinweises auf die Patenterteilung: **11.09.2019**
(21) Anmeldenummer: 17179517.2
(22) Anmeldetag: 18.05.2010
(51) Int. Cl.: B27D 5/00

(54) **ZUFUHRVORRICHTUNG ZUM ZUFÜHREN EINES BESCHICHTUNGSMATERIALS**
SUPPLY DEVICE FOR SUPPLYING A COATING MATERIAL
APPAREIL D'ALIMENTATION DESTINÉ À L'ALIMENTATION EN MATÉRIAU DE REVÊTEMENT

(30) Priorität: 18.05.2009 DE 102009021676
(43) Veröffentlichungstag der Anmeldung: 27.12.2017
(62) Teilanmeldung aus: 10163083.8
(73) Patentinhaber: HOMAG GmbH, 72296 Schopfloch (DE)
(72) Erfinder: Götz, Reiner, 72160 Horb-Diessen (DE)
(74) Vertreter: Hoffmann Eitle

(56) Entgegenhaltungen:
- EP-A2- 1 860 593
- EP-A2- 1 862 949

## Beschreibung

### Technisches Gebiet

Die Erfindung betrifft eine Bevorratungsvorrichtung zum Zuführen eines Beschichtungsmaterials zu einer Maschine zum Beschichten von Werkstücken, die zumindest teilweise aus Holz, Holzwerkstoffen, Kunststoff oder dergleichen bestehen, nach dem Oberbegriff von Anspruch 1. Ein solche Bevorratungsvorrichtung ist aus dem Dokument EP1862949A2 bekannt.

### Stand der Technik

Bei der Veredelung von Werkstücken, beispielsweise in der Möbel- und Bauelementeindustrie, werden diese häufig mit einem Beschichtungsmaterial versehen, insbesondere mit einem Kantenmaterial, das auf eine Schmalfläche des Werkstücks aufgebracht wird. Zu diesem Zweck müssen entsprechende Beschichtungsmaschinen (z. B. Kantenanleimmaschinen) mit Beschichtungsmaterial versorgt werden, das üblicherweise in Rollenform bereitgestellt wird. So offenbart beispielsweise die EP 1 862 949 eine Kassette zum Aufnehmen und Bereitstellen eines Kantenmaterials.

Sobald ein bestimmtes Beschichtungsmaterial benötigt wird, wird dieses beispielsweise auf einem Rollwagen neben der Maschine platziert, und das freie Ende des Beschichtungsmaterials wird über eine Zufuhrvorrichtung zu der Beschichtungsmaschine zugeführt. So vertreibt die Anmelderin beispielsweise Zufuhrvorrichtungen nach dem Oberbegriff von Anspruch 1. Dabei wird das Beschichtungsmaterial von einer Bedienperson mit beiden Händen weit in die Führungseinrichtung der Zufuhreinrichtung eingeführt, bis das Beschichtungsmaterial schließlich von der Fördereinrichtung gegriffen und zu der Beschichtungsmaschine zugeführt wird.

In letzter Zeit nimmt die Vielfalt der zu veredelnden Werkstücke immer weiter zu, so dass im Extremfall jedes in einer Beschichtungsmaschine zu veredelnde Werkstück mit einem unterschiedlichen Beschichtungsmaterial zu versehen ist (sog. Stückzahl-1-Fertigung). Dies bedingt, dass sehr häufig ein Wechsel des zu der Beschichtungsmaschine zuzuführenden Beschichtungsmaterials erfolgen muss.

### Darstellung der Erfindung

Es ist daher Aufgabe der Erfindung, eine gattungsgemäße Bevorratungsvorrichtung für Beschichtungsmaterial, bereitzustellen, die einen zügigen und störungsfreien Wechsel von Beschichtungsmaterial ermöglicht.

Der Erfindung liegt der Gedanke zugrunde, das zeitaufwändige und bisweilen störungsanfällige Einfädeln des Beschichtungsmaterials durch eine Bedienperson weitgehend zu vermindern. Zu diesem Zweck ist vorgesehen, dass bei einer nicht beanspruchten gattungsgemäßen Zufuhrvorrichtung mindestens ein Förderelement der Fördereinrichtung in einem Einlaufbereich der Führungseinrichtung vorgesehen ist. Auf diese Weise wird es erstmals möglich, das Beschichtungsmaterial durch einen einfachen Handgriff - und ggf. auch maschinell mittels einer vorgelagerten Vorrichtung - in die Zufuhrvorrichtung einzulegen. Die für den Wechsel und das Zuführen eines Beschichtungsmaterials wird hierdurch drastisch reduziert.

Darüber hinaus können mögliche Störungs- und Fehlerquellen beseitigt werden, beispielsweise da das bisweilen dünne und empfindliche Beschichtungsmaterial nicht durch vielfaches manuelles Umgreifen eingefädelt werden muss. Insgesamt wird auf diese Weise auch bei häufig wechselnden Beschichtungsmaterialien bis hin zu einer Stückzahl-1-Fertigung ein zügiger und störungsarmer Betrieb ermöglicht.

Gemäß einer Weiterbildung ist vorgesehen, dass der Einlaufbereich der Führungseinrichtung stromaufwärts der Rückhalteeinrichtung gelegen ist. Hierdurch wird sichergestellt, dass das Beschichtungsmaterial problemlos und ohne mögliches Verknicken oder sonstige Beschädigungen des Beschichtungsmaterials zu dem im Einlaufbereich gelegenen Förderelement zugeführt werden kann, sodass sich ein zügiger und störungsfreier Betrieb der erfindungsgemäßen Zufuhrvorrichtung ergibt.

Obgleich die Fördereinrichtung lediglich durch das im Einlaufbereich der Führungseinrichtung vorgesehene Förderelement gebildet sein kann, ist gemäß einer Weiterbildung der Erfindung vorgesehen, dass die Fördereinrichtung mehrere Förderelemente aufweist, von denen mindestens eines Stromabwärts der Rückhalteeinrichtung gelegen ist. Hierdurch kann die Förderstabilität des Beschichtungsmaterials weiter gesteigert werden, und die Zufuhrgeschwindigkeit des Beschichtungsmaterials kann ebenfalls erhöht werden. darüber hinaus kann beispielsweise die Rückhalteeinrichtung aktiviert werden, sobald das Beschichtungsmaterial das stromabwärts der Rückhalteeinrichtung gelegene Förderelement erreicht.

Gemäß einer Weiterbildung weist die Führungsnut der Führungseinrichtung eine sich in Zufuhrrichtung kontinuierlich erstreckende Führungsfläche auf, wobei kontinuierlich in diesem Zusammenhang bedeutet, dass die Führungsfläche lediglich durch Elemente der Fördereinrichtung oder Rückhalteeinrichtung unterbrochen sein kann. Auf diese Weise wird auch bei dünnen und zur Faltenbildung neigenden Beschichtungsmaterialien ein sicheres Zuführen des Beschichtungsmaterials sichergestellt. Alternativ ist es jedoch ebenso möglich, die Führungsfläche quasi-kontinuierlich dadurch auszubilden, dass sie mehrere Abschnitte aufweist, die einander in Zufuhrrichtung überlappen. Hierunter fallen auch Führungsflächen, die je nach Verlauf der Führungseinrichtung bzw. Führungsnut in Zufuhrrichtung jeweils auf der vom Krümmungsmittelpunkt entfernt gelegenen Seite des Beschichtungsmaterials in überlappender Weise verlaufen. Denn auch hierdurch kann vorteilhaft sichergestellt werden, dass das vorlaufende freie Ende des zugeführten Beschichtungsmaterials stets durch eine geeignete Führungsfläche zu der Beschichtungsmaschine hingeführt werden kann.

Das mindestens eine Förderelement der Fördereinrichtung kann auf unterschiedlichste Art und Weise ausgestaltet sein. Gemäß einer Weiterbildung ist jedoch vorgesehen, dass mindestens ein Förderelement eine Förderwalze und eine Andruckwalze aufweist, die zwischen einander einen Förderspalt definieren. Hierdurch ergibt sich ein besonders stabiler und beschädigungsfreier Förderbetrieb, wobei die jeweilige Andruckwalze verstellbar sein kann, um das Beschichtungsmaterial zunächst leicht einlegen und anschleißend stabil fördern zu können.

Zu den Vorteilen und Besonderheiten der in den Aspekten 6 bis 9 definierten Merkmale wird zur Vermeidung von Wiederholungen auf die unten stehende ausführliche Beschreibung bevorzugter Ausführungsformen verwiesen.

Die Erfindung betrifft eine Bevorratungsvorrichtung für Beschichtungsmaterial, insbesondere zum Bereitstellen von rollenförmigem Beschichtungsmaterial zu einer Zufuhrvorrichtung. Eine derartige Bevorratungsvorrichtung kann im einfachsten Falle durch einen Träger mit einer oder mehreren Aufnahmen für Rollen (oder ggf. Kassetten etc.) von Beschichtungsmaterial gebildet sein. Allerdings gestaltet sich das Einlegen und Entnehmen einer Beschichtungsmaterialrolle aus vielfältigen Gründen als schwierig und zeitaufwändig. Dies kommt zunächst durch das meist hohe Gewicht der Beschichtungsmaterialrollen, das dazu führt, dass diese nur schwer in bekannte Bevorratungsvorrichtungen hineingehoben werden können.

Darüber hinaus ist auch das Lagesichern des Beschichtungsmaterials auf einer Spule oder Kassette kompliziert. Hierfür kommt üblicherweise ein sogenannter Niederhalter zum Einsatz. Diese muss meist mit mehreren Handgriffen bzw. Werkzeugeinsätzen gelöst, verschoben, fixiert, etc. werden.

Diese Aufgabe wird durch eine Bevorratungsvorrichtung für Beschichtungsmaterial nach Anspruch 1 gelöst. Dieser Zielrichtung der Erfindung liegt der Gedanke zugrunde, den Zugriff auf das in der Bevorratungsvorrichtung bevorratete Beschichtungsmaterial deutlich zu erleichtern. Zu diesem Zweck ist erfindungsgemäß vorgesehen, dass bei einer gattungsgemäßen Bevorratungsvorrichtung zumindest eine Rollenaufnahme jeweils von einer Bevorratungsposition in einem Aufnahmefach in eine Rüstposition, die zumindest abschnittsweise außerhalb des Gehäuses liegt, bewegbar ist.

Auf diese Weise kann das Einbringen und Entnehmen des Beschichtungsmaterials in bzw. aus der Bevorratungsvorrichtung drastisch vereinfacht werden, so dass es nicht nur zügiger, sondern auch störungsfreier erfolgen kann. Hierdurch bietet sich die erfindungsgemäße Bevorratungsvorrichtung auch nicht nur für eine manuelle Beschichtung an, sonder kann vorteilhaft auch für eine vollständig oder zumindest teilweise automatisierte Beschickung genutzt werden. Dies wiederum lässt das Einbringen und Entnehmen des Beschichtungsmaterials noch zügiger werden.

### Kurze Beschreibung der Zeichnungen

Fig. 1 zeigt schematisch eine Perspektivansicht einer Zufuhrvorrichtung gemäß einer Ausführungsform der Erfindung.
Fig. 2 zeigt schematisch verschiedene Perspektivansichten einer Bevorratungsvorrichtung gemäß einer bevorzugten Ausführungsform der vorliegenden Erfindung;
Fig. 3 zeigt schematisch zwei Perspektivansichten einer Rollenaufnahme gemäß einer Ausführungsform der vorliegenden Erfindung.

### Ausführliche Beschreibung bevorzugter Ausführungsformen

Bevorzugte Ausführungsformen der Erfindung werden nachfolgend ausführlich unter Bezugnahme auf die begleitenden Zeichnungen beschrieben.

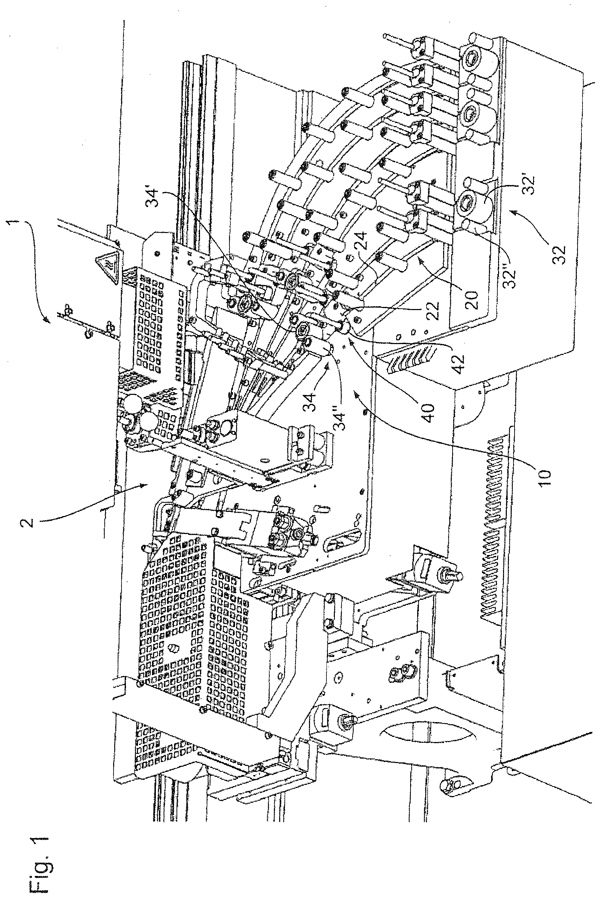

Eine Zufuhrvorrichtung 10 zum Zuführen eines Beschichtungsmaterials zu einer Beschichtungsmaschine 1 ist in Fig. 1 schematisch in einer Perspektivansicht dargestellt. Die Beschichtungsmaschine 1, die in Fig. 1 zumindest ansatzweise gezeigt ist, dient in der vorliegenden Ausführungsform zum Beschichten von Werkstücken, die zumindest teilweise aus Holz, Holzwerkstoffen, Kunststoff oder dergleichen bestehen, wie sie im Bereich der Möbel- und Bauelementeindustrie verbreitet zum Einsatz kommen. Dabei ist die Beschichtungsmaschine 1 in der vorliegenden Ausführungsform dazu ausgelegt, ein Kantenmaterial auf eine Schmalfläche eines Werkstücks im Durchlaufverfahren aufzubringen. Es ist jedoch zu beachten, dass die erfindungsgemäße Zufuhrvorrichtung auch bei sogenannten Stationärmaschinen, bei denen das Werkstück während der Bearbeitung nicht oder nur in Grenzen bewegt wird, zum Einsatz kommen kann.

Bei dem Beschichtungsmaterial kann es sich beispielsweise um Kunststoff- oder Furnierkanten, aber auch um völlig andere Materialien wie Metall etc. handeln. Um das Beschichtungsmaterial zu der Beschichtungsmaschine 1 zuzuführen, weist die Zufuhrvorrichtung 10 zunächst mehrere Führungseinrichtungen 20 auf, die in der vorliegenden Ausführungsform durch Führungsnuten 24 gebildet sind. Diese erstrecken sich von einem Einlaufbereich (unten in Fig. 1) bis zu einem Auslaufbereich der Fördereinrichtung, wobei sich an den Auslaufbereich der Führungseinrichtung 20 ein Anbringaggregat (z.B. eine Andruckrolle) 2 der Beschichtungsmaschine 1 anschließt. Ferner weist die Führungseinrichtung 20 mehrere Führungswalzen oder -bolzen 26 auf, die auch bei Beschichtungsmaterialien mit größerer Breite für eine sichere Führung derselben sorgen.

Obgleich die Zufuhrvorrichtung 10 in der vorliegenden Ausführungsform eine Vielzahl von Führungseinrichtungen 20 bzw. Führungsnuten 24 aufweist, ist es ebenso möglich, dass lediglich eine einzelne Führungseinrichtung 20 vorhanden ist.

Ferner umfasst die Zufuhrvorrichtung 10 eine Fördereinrichtung zum Fördern des Beschichtungsmaterials entlang der Führungseinrichtung 20, sowie eine Rückhalteeinrichtung 40 zum Rückhalten des Beschichtungsmaterials entgegen der Zufuhrrichtung (wie unten stehend noch näher erläutert wird).

Die Fördereinrichtung weist in der vorliegenden Ausführungsform zwei Förderelement 32, 34 auf, die jeweils durch eine Förderwalze 32', 34' sowie eine Andruckwalze 32", 34" gebildet sind. Dabei sind die Andruckwalzen in Bezug auf die zugeordnete Förderwalze 32', 34' zurückziehbar und zustellbar, um ein leichtes Einfädeln des Beschichtungsmaterials mit einem stabilen Fördervorgang zu vereinen. Es ist jedoch zu beachten, dass auch völlig andere Förderelemente zum Einsatz kommen können, und dass Förderelemente oder sonstige Vorteile der Fördereinrichtung auch ganz oder teilweise integral mit der Rückhalteeinrichtung 40 ausgeführt sein können.

In jedem Falle ist mindestens ein Förderelement 32 der Fördereinrichtung in einem Einlaufbereich der Führungseinrichtung 20 vorgesehen. In der konkreten Ausführungsform gemäß Fig. 1 ist das Förderelement 32 zu diesem Zweck stromaufwärts der Führungsnut 24 der Führungseinrichtung angeordnet. Dieses Förderelement 32 kann jedoch auch weiter in stromabwärts gelegener Richtung gelegen sein, wobei der Einlaufbereich und somit das Förderelement 32 bevorzugt stromaufwärts der Rückhalteeinrichtung 40 gelegen ist. Zusätzlich ist in der vorliegenden Ausführungsform ein weiteres Förderelement 34 jedoch stromabwärts der Rückhalteeinrichtung gelegen, sodass das Beschichtungsmaterial besonders stabil entlang der Führungseinrichtung 20 gefördert und geführt werden kann.

Die Führungsnut 24 der Führungseinrichtung 20 weist in der vorliegenden Ausführungsform eine sich in Zufuhrrichtung kontinuierlich erstreckende Führungsfläche 22 auf, wobei kontinuierlich in diesem Zusammenhang bedeutet, dass die Führungsfläche lediglich durch Elemente der Fördereinrichtung oder Rückhalteeinrichtung 40 unterbrochen sein kann. Auf diese Weise wird auch bei dünnen und zur Faltenbildung neigenden Beschichtungsmaterialien ein sicheres Zuführen des Beschichtungsmaterials sichergestellt. Obgleich in Fig. 1 nicht gezeigt, ist es jedoch ebenso möglich, die Führungsfläche 22 quasi-kontinuierlich dadurch auszubilden, dass sie mehrere Abschnitte aufweist, die einander in Zufuhrrichtung überlappen. Hierunter fallen auch Führungsflächen, die je nach Verlauf der Führungseinrichtung 20 bzw. Führungsnut 24 in Zufuhrrichtung jeweils auf der vom Krümmungsmittelpunkt entfernt gelegenen Seite des Beschichtungsmaterials in überlappender Weise verlaufen. Denn auch hierdurch wird sichergestellt, dass das vorlaufende freie Ende des zugeführten Beschichtungsmaterials stets durch eine geeignete Führungsfläche zu der Beschichtungsmaschine 1 hingeführt werden kann.

Die Rückhalteeinrichtung 40 weist in der vorliegenden Ausführungsform ein bewegbares Druckelement 42 auf, das beispielsweise durch eine Bremsrolle gebildet sein kann, die eingerichtet ist, eine Druckkraft auf eine Oberfläche des in der Führungseinrichtung 20 geführten Beschichtungsmaterials aufzubringen. Zu diesem Zweck kann die Bremsrolle bzw. das Druckelement 42 verfahrbar sein, insbesondere auch um ein leichtes Einfädeln des Beschichtungsmaterials zu ermöglichen und erst bei eingefädeltem Beschichtungsmaterial das Druckelement 42 in bremsenden Druckkontakt mit dem Beschichtungsmaterial zu bringen.

Um diese Verfahrbewegung zu erreichen, weist die Zufuhrvorrichtung in der vorliegenden Ausführungsform eine nicht näher gezeigte Freigabeeinrichtung auf, die eingerichtet ist, die Rückhaltewirkung der Bremsrolle 42 dadurch aufzuheben, dass die Bremsrolle in eine zurückgezogene, von der Führungsfläche 22 beabstandete Position gefahren wird. Bei der Freigabeeinrichtung kann es sich beispielsweise um einen Pneumatikzylinder oder andere selbstständige Einrichtungen handeln, obgleich im Rahmen der Erfindung auch manuell zu betätigende Lösungen wie beispielsweise Rückhaltehaken oder dergleichen zum Einsatz kommen können. Darüber hinaus kann das selbsttätige Betätigungselement (wie beispielsweise der Pneumatikzylinder) der Bremsrolle 42 auch betrieblich mit der Andruckwalze 34" gekoppelt sein, sodass mittels eines oder mehrere Pneumatikzylinder oder dergleichen die Andruckwalze 34" und die Bremsrolle 42 in verschiedene geeignete Andruckstellungen gebracht werden können. Zu diesem Zweck können Andruckwalze 34" und Bremsrolle 42 beispielsweise auch auf einem gemeinsamen Schwenkhebel sitzen, an welchem der eine oder die mehreren Freigabeeinrichtungen (wie z.B. Pneumatikzylinder) angreifen.

Der Betrieb der erfindungsgemäßen Zufuhrvorrichtung vollzieht sich beispielsweise wie folgt. Ein zu der Beschichtungsmaschine 1 zuzuführendes Beschichtungsmaterials wird manuell oder gegebenenfalls auch automatisiert bzw. maschinell zu dem im Einlaufbereich der Führungseinrichtung 20 vorgesehenen Förderelement 32 zugeführt und zwischen Förderwalze 32' und Andruckwalze 32" eingelegt. Durch entsprechende Maschinenbetätigung oder gegebenenfalls auch Sensorerkennung wird die Andruckwalze 32" zu der Förderwalze 32' zugestellt, sodass der Förderbetrieb des Beschichtungsmaterials entlang der Führungseinrichtung 20 begonnen wird und sich das Beschichtungsmaterial entlang der Führungsnut 24 bewegt. Dabei wird insbesondere das freie, vorlaufende Ende des Beschichtungsmaterials durch die sich kontinuierlich erstreckende Führungsfläche 22 geführt.

Ferner wird die Bremsrolle 42 durch die Freigabeeinrichtung von der Führungsfläche 22 zurückgezogen, und auch die Andruckwalze 34" befindet sich in einer offenen Stellung. Sobald das Beschichtungsmaterial den durch die Förderwalze 34' und die Andruckwalze 34" gebildeten Förderspalt durchlaufen hat, kann nun auch die Andruckwalze 34" zu der Förderwalze 34' zugestellt werden, sodass nun auch das Förderelement 34 einen Fördervorschub auf das Beschichtungsmaterial aufbringt. Nunmehr kann auch die Bremsrolle 42 zu dem Beschichtungsmaterial zugestellt werden, sodass das Beschichtungsmaterial gegenüber einem Herausziehen eines Beschichtungsmaterials entgegen der Zufuhrrichtung gesichert ist.

Schließlich wird das Beschichtungsmaterial zu dem Anbringaggregat 2 der Beschichtungsmaschine 1 zugeführt und kann nun auf bekannte Weise auf das zu beschichtende Werkstück aufgebracht werden.

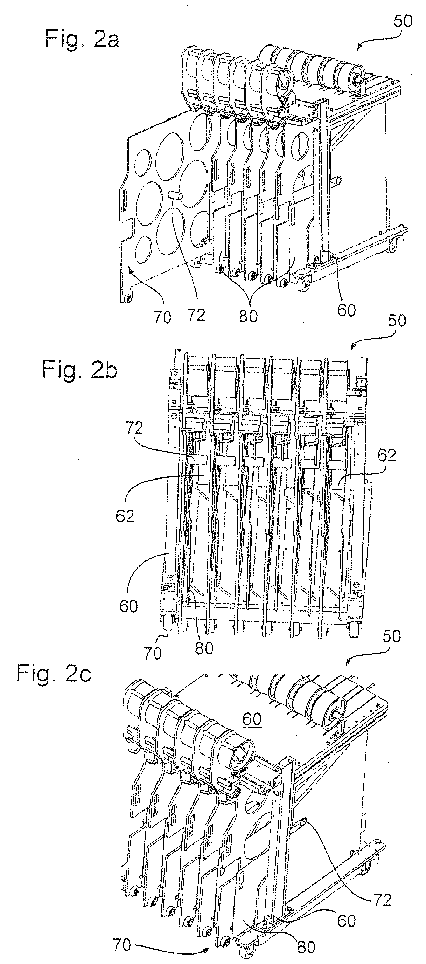

Eine Bevorratungsvorrichtung 50 zum Bereitstellen von rollenförmigem Beschichtungsmaterial zu der vorstehend erläuterten Zufuhrvorrichtung 10 oder anderen geeigneten Zufuhrvorrichtungen ist in Fig. 2 schematisch in drei Perspektivansichten dargestellt. Obgleich das Beschichtungsmaterial in Fig. 2 nicht gezeigt ist, wird dieses üblicherweise in Rollenform auf einer geeigneten Spule oder gegebenenfalls einer geeigneten Kassette bereitgestellt, wie dies beispielsweise in der bereits eingangs genannten EP 1 862 949 offenbart ist.

Die Bevorratungsvorrichtung 50 umfasst zunächst ein Gehäuse 60, das durch mehrere miteinander verbundene Träger und Platten nach Art eines offenen Gehäuses aufgebaut ist und mehrere Aufnahmefächer 62 für Beschichtungsmaterial definiert. Ferner umfasst die Bevorratungsvorrichtung eine Mehrzahl von Rollenaufnahmen 70, die in der vorliegenden Ausführungsform als Lochblech ausgestaltet sind, an denen ein Aufnahmeelement 62 in Form eines Zapfens oder eine Nabe vorgesehen ist. Dabei dient das Aufnahmeelement 72 dazu, ein jeweils eine Beschichtungsmaterialrolle aufzunehmen, beispielsweise indem die Spule oder Kassette der Beschichtungsmaterialrolle auf das Aufnahmeelement bzw. den Zapfen 72 der jeweiligen Rollenaufnahme 70 aufgeschoben wird.

Jede der Rollenaufnahmen 70 ist von einer Bevorratungsposition, die sich innerhalb eines zugeordneten Aufnahmefachs 62 in dem Gehäuse 60 befindet, in eine Rüstposition bewegbar, die zumindest abschnittsweise außerhalb des Gehäuses 60 liegt. Dabei zeigt Fig. 2a) eine Rollenaufnahme 70 in ihrer Rüstposition, in welcher eine Beschichtungsmaterialrolle auf das Aufnahmeelement 72 der Rollenaufnahme aufgesetzt oder von dieser entnommen werden kann. Demgegenüber befinden sich die übrigen Rollenaufnahmen 70 in Fig. 2a) in der Bevorratungsposition innerhalb des jeweiligen Aufnahmefachs 72.

Die Rollenaufnahmen 70 können prinzipiell manuell zwischen der Bevorratungsposition und der Rüstposition bewegt werden. In der vorliegenden Ausführungsform weist die Bevorratungsvorrichtung 50 jedoch eine nicht näher gezeigte Antriebsvorrichtung auf, um die Rollenaufnahmen 70 einzeln oder gegebenenfalls gemeinsam zwischen der Bevorratungsposition und der Rüstposition zu bewegen. Um dabei einen möglichst leichtgängigen und stabilen Bewegungsvorgang zu ermöglichen, erstreckt sich die Bewegungsrichtung beim Bewegen der Rollenaufnahme zwischen der Bevorratungsposition und der Rüstposition horizontal bzw. innerhalb eines Winkels von höchstens 45° gegenüber der Horizontalen.

Darüber hinaus weist die Bevorratungsvorrichtung 50 für jede Rollenaufnahme 70 einen Niederhalter 80 auf, der in der vorliegenden Ausführungsform ebenfalls durch ein Lochblech oder eine Stabkonstruktion gebildet sein kann. Die Niederhalter 80 sind jeweils eingerichtet, eine in die zugeordnete Rollenaufnahme 70 eingelegte Beschichtungsmaterialrolle an das Lochblech der Rollenaufnahme 70 (senkrecht zur Rollenebene) anzudrücken und somit zu stabilisieren. Gemäß der Erfindung sind die Niederhalter 80 senkrecht zur Rollenebene bewegbar beispielsweise manuell oder motorisch oder auch mittels eines manuell oder motorisch zu betätigenden Spindelantriebs. Ferner können für die Verstellbarkeit der Niederhalter 80 sogenannte Kulissensteine oder ähnliche Konstruktionen zum Einsatz kommen.

Ferner kann die Bevorratungsvorrichtung 50, obgleich in Fig. 2 nicht gezeigt, eine Übergabeeinrichtung aufweisen, die eingerichtet ist, ein freies Ende eines in der Bevorratungseinrichtung aufgenommen Beschichtungsmaterials an die oben beschriebene oder eine andere geeignete Zufuhrvorrichtung übergeben.

In der erfindungsgemäßen Bevorratungsvorrichtung können zügig und problemlos auch schwergewichtige Beschichtungsmaterialrollen bevorratet werden, und zwar in der Weise, dass das Beschichtungsmaterial zügig und störungsfrei manuell oder mittels einer geeigneten Übergabeeinrichtung an eine zugeordnete Zufuhrvorrichtung und weiter zu einer Beschichtungsmaschine übergeben werden können, wie dies oben bereits beschrieben wurde.

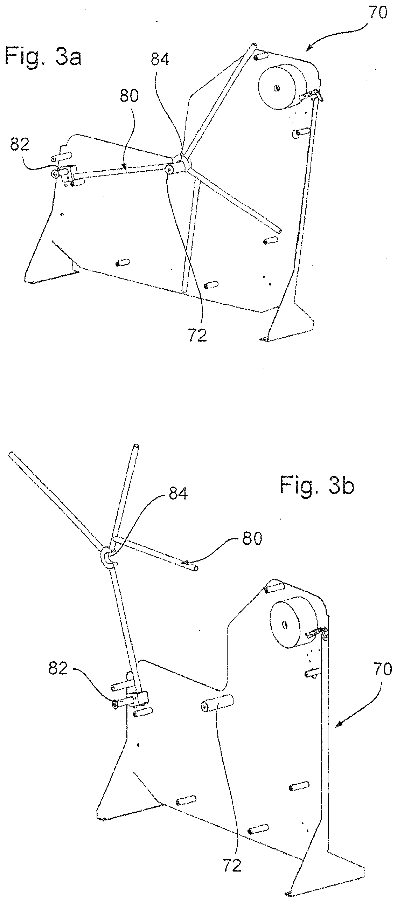

Eine alternative Ausgestaltung einer Rollenaufnahme 70 für Beschichtungsmaterialrollen ist in Fig. 3 schematisch in zwei Perspektivansichten dargestellt. Dabei ist zu beachten, dass die in Fig. 3 gezeigte Rollenaufnahme 70 sowohl innerhalb der erfindungsgemäßen Bevorratungsvorrichtung 50, aber auch als eigenständiges Einzelbauteil zum Einsatz kommen kann. Die in Fig. 3 gezeigte Rollenaufnahme zeichnet sich dadurch aus, dass der Niederhalter 80 schwenkbar über eine Schwenkachse 82 an der Rollenaufnahme 70 angebracht ist. dabei erstreckt sich die Schwenkachse 82 senkrecht zur Rollenebene und ist derart bemessen, dass der Niederhalter 80 entlang der Schwenkachse 82 verschiebbar ist. Auf diese Weise kann der Niederhalter 80 auf verschiedene Rollenseiten eingestellt werden.

Darüber hinaus weist der Niederhalter 80 eine Verbindungsöffnung 84 auf, die in der vorliegenden Ausführungsform eine konische innere Umfangsfläche aufweist. Die Verbindungsöffnung 84 ist mit dem Aufnahmeelement bzw. Zapfen 72 in Eingriff bringbar, wobei der Zapfen derart ausgestaltet ist, dass sich in Verbindung mit der konischen inneren Umfangsfläche der Verbindungsöffnung 84 senkrecht zur Rollenebene eine Selbsthemmung ergibt. Auf diese Weise kann der Niederhalter das Beschichtungsmaterial sicher stabilisieren, wobei im Rahmen der Erfindung unterschiedlichste Selbsthemmungsmechanismen zwischen Niederhalter 80 und Rollenaufnahme 70 bzw. Aufnahmeelement 72 zum Einsatz kommen können. Hierdurch kann auf ein Einstellen und Nachjustieren des Niederhalters, beispielsweise mittels Schraubenverbindungen, verzichtet werden.

Weitere nicht beanspruchte Aspekte der Erfindung:

### Aspekt 1:

Zufuhrvorrichtung 10 zum Zuführen eines Beschichtungsmaterials zu einer Maschine 1 zum Beschichten von Werkstücken, die zumindest teilweise aus Holz, Holzwerkstoffen, Kunststoff oder dergleichen bestehen, wobei die Zufuhrvorrichtung 10 aufweist:
mindestens eine Führungseinrichtung 20 zum Führen eines Beschichtungsmaterials in einer Zufuhrrichtung,
mindestens eine Fördereinrichtung zum Fördern des Beschichtungsmaterials in der Zufuhrrichtung, und
mindestens eine Rückhalteeinrichtung 40 zum Rückhalten des Beschichtungsmaterials in mindestens einer Richtung, bevorzugt entgegen der Zufuhrrichtung, wobei
mindestens ein Förderelement 32 der Fördereinrichtung in einem Einlaufbereich der Führungseinrichtung 20 vorgesehen ist.

### Aspekt 2:

Zufuhrvorrichtung nach Aspekt 1, bei der der Einlaufbereich der Führungseinrichtung 20 stromaufwärts der Rückhalteeinrichtung 40 gelegen ist.

### Aspekt 3:

Zufuhrvorrichtung nach Aspekt 1 oder 2, bei der die Fördereinrichtung mehrere Förderelemente 32, 34 aufweist, von denen mindestens eines stromabwärts 34 der Rückhalteeinrichtung 40 gelegen ist.

### Aspekt 4:

Zufuhrvorrichtung nach einem der vorhergehenden Aspekte, bei der die Führungseinrichtung 20) mindestens eine sich in Zufuhrrichtung erstrechende Führungsfläche 22 aufweist, die kontinuierlich entlang der Führungseinrichtung 20 verläuft oder mehrere Abschnitte aufweist, deren Enden einander in Zufuhrrichtung überlappen.

### Aspekt 5:

Zufuhrvorrichtung nach einem der vorhergehenden Aspekte, bei der mindestens ein Förderelement 32, 34 eine Förderwalze 32' und eine Andruckwalze 32" aufweist, die zwischen einander einen Förderspalt definieren.

### Aspekt 6:

Zufuhrvorrichtung nach einem der vorhergehenden Aspekte, bei der die Rückhalteeinrichtung 40 ein bewegbares Druckelement 42 aufweist, das eingerichtet ist, eine Druckkraft auf eine Oberfläche eines in der Führungseinrichtung 20 geführten Beschichtungsmaterials aufzubringen.

### Aspekt 7:

Zufuhrvorrichtung nach einem der vorhergehenden Aspekte, bei der die Zufuhrvorrichtung mindestens eine Freigabeeinrichtung aufweist, die eingerichtet ist, die Rückhaltewirkung der Rückhalteeinrichtung vorübergehend zumindest teilweise aufzuheben.

### Aspekt 8:

Zufuhrvorrichtung nach Aspekt 7, bei der die Freigabeeinrichtung ein Betätigungselement aufweist, das eingerichtet ist, selbsttätig eine Freigabekraft auf die Rückhalteeinrichtung aufzubringen.

### Aspekt 9:

Zufuhrvorrichtung nach Aspekt 8, bei der das Betätigungselement betrieblich mit mindestens einem Förderelement der Fördereinrichtung derart gekoppelt ist, um eine Andruckkraft auf das Förderelement aufzubringen.

## Patentansprüche

1. Bevorratungsvorrichtung (50) für Beschichtungsmaterial, insbesondere zum Bereitstellen von rollenförmigem Beschichtungsmaterial zu einer Zufuhrvorrichtung, umfassend:
ein Gehäuse (60), das mindestens ein Aufnahmefach (62) für Beschichtungsmaterial definiert,
mindestens eine Rollenaufnahme (70), die jeweils mindestens ein Aufnahmeelement (72) zum drehbaren Aufnehmen einer Rolle Beschichtungsmaterial aufweist,
für jede Rollenaufnahme (70) mindestens einen Niederhalter (80), der eingerichtet ist, eine in eine Rollenaufnahme (70) eingelegte Rolle Beschichtungsmaterial senkrecht zur Rollenebene zu stabilisieren,
wobei
zumindest eine Rollenaufnahme (70) jeweils von einer Bevorratungsposition in einem Aufnahmefach in eine Rüstposition, die zumindest abschnittsweise außerhalb des Gehäuses (60) liegt, bewegbar ist,
**dadurch gekennzeichnet, dass** der Niederhalter (80) senkrecht zur Rollenebene, insbesondere manuell, motorisch oder mittels eines manuell oder motorisch betätigten Spindelantriebs, bewegbar ist.

2. Bevorratungsvorrichtung nach Anspruch 1, **dadurch gekennzeichnet, dass** der Niederhalter (80) mittels Kulissensteinen senkrecht zur Rollenebene bewegbar ist.

3. Bevorratungsvorrichtung nach Anspruch 1 oder 2, **dadurch gekennzeichnet, dass** zumindest eine Rollenaufnahme (70) geradlinig zwischen der Bevorratungsposition und der Rüstposition bewegbar ist, wobei die Bewegungsrichtung bevorzugt einen Winkel von höchstens 45° gegenüber der Horizontalen einnimmt.

4. Bevorratungsvorrichtung nach einem der Ansprüche 1 bis 3, **dadurch gekennzeichnet, dass** sie eine Antriebseinrichtung aufweist, um zumindest eine Rollenaufnahme (70) zwischen der Bevorratungsposition und der Rüstposition zu bewegen.

5. Bevorratungsvorrichtung nach einem der Ansprüche 1 bis 4, **dadurch gekennzeichnet, dass** sie einen Niederhalterantrieb aufweist, der eingerichtet ist, zumindest einen Niederhalter (80) senkrecht zur Rollenebene zu bewegen.

6. Bevorratungsvorrichtung nach einem der Ansprüche 1 bis 5, **dadurch gekennzeichnet, dass** zumindest ein Niederhalter (80) selbsthemmende Verbindungsmittel (84) aufweist, um den Niederhalter (80) senkrecht zur Rollenebene selbsthemmend mit der Rollenaufnahme (70) zu verbinden.

7. Bevorratungsvorrichtung nach einem der Ansprüche 1 bis 6, **dadurch gekennzeichnet, dass** sie ferner eine Übergabeeinrichtung aufweist, die eingerichtet ist, ein freies Ende eines in der Bevorratungsvorrichtung aufgenommen Beschichtungsmaterials an eine Zufuhrvorrichtung einer Maschine zu übergeben.

## Claims

1. Supply device (50) for covering material, particularly for making covering material in reel form available to an infeed apparatus, comprising:
a shell (60) which defines at least one receiving compartment (62) for covering material,
at least one reel-holder (70), each of which has at least one holding member (72) to hold a reel of covering material in such a way as to be rotatable,
for each reel-holder (70), at least one hold-down (80) which is adapted to hold a reel of covering material inserted on a reel-holder (70) stable perpendicularly to the plane of the reel,
at least one reel-holder (70) being able to be moved from a supplying position in a receiving compartment to a loading position in which it is situated at least partly outside the shell (60), **characterised in that** the hold-down (80) can be moved perpendicularly to the plane of the reel, in particular manually, by motor or by means of a spindle drive operated manually or by motor.

2. Supply device according to claim 1, **characterised in that** the hold-down (80) can be moved perpendicularly to the plane of the reel by means of sliding blocks.

3. Supply device according to claim 1 or 2, **characterised in that** at least one reel-holder (70) can be moved in a straight line between the supplying position and the loading position, the direction of movement preferably making an angle of not more than 45° with the horizontal.

4. Supply device according to one of claims 1 to 3, **characterised in that** it has a drive means to move at least one reel-holder (70) between the supplying position and the loading position.

5. Supply device according to one of claims 1 to 4, **characterised in that** it has a hold-down drive which is adapted to move at least one hold-down (80) perpendicularly to the plane of the reel.

6. Supply device according to one of claims 1 to 5, **characterised in that** at least one hold-down (80) has self-locking connecting means (84) to make a self-locking connection between the hold-down (80) and the reel-holder (70), perpendicularly to the plane of the reel.

7. Supply device according to one of claims 1 to 6, **characterised in that** it also has a transfer means which is adapted to transfer a free end of a covering material which is held in the supply device to an infeed apparatus of a machine.

## Revendications

1. Dispositif d'approvisionnement (50) pour un matériau de revêtement, en particulier pour la fourniture d'un matériau de revêtement en forme de rouleau à un dispositif d'alimentation, comprenant :
un boîtier (60) qui définit au moins un compartiment de logement (62) pour le matériau de revêtement,
au moins un logement de rouleau (70) qui inclut à chaque fois au moins un élément de logement (72) destiné à loger un rouleau de matériau de revêtement de manière à ce que celui-ci puisse tourner,
pour chaque logement de rouleau (70), au moins un dispositif de maintien (80) qui est prévu pour stabiliser un rouleau de matériau de revêtement placé dans un logement de rouleau (70) perpendiculairement au plan de rouleau,
dans lequel
au moins un logement de rouleau (70) peut être déplacé à chaque fois d'une position d'approvisionnement dans un compartiment de logement à une position d'équipement qui se trouve au moins en partie à l'extérieur du boîtier (60),
**caractérisé en ce que** le dispositif de maintien (80) est déplaçable perpendiculairement au plan de rouleau, en particulier manuellement, de manière motorisée ou au moyen d'un entraînement à broche actionné manuellement ou de manière motorisée.

2. Dispositif d'approvisionnement selon la revendication 1, **caractérisé en ce que** le dispositif de maintien (80) est déplaçable au moyen de patins coulissants perpendiculairement au plan de rouleau.

3. Dispositif d'approvisionnement selon la revendication 1 ou 2, **caractérisé en ce qu'**au moins un logement de rouleau (70) peut être déplacé en ligne droite entre la position d'approvisionnement et la position d'équipement, dans lequel la direction de déplacement présente de préférence un angle de 45° au maximum par rapport à l'horizontale.

4. Dispositif d'approvisionnement selon l'une quelconque des revendications 1 à 3, **caractérisé en ce qu'**il inclut un dispositif d'entraînement pour déplacer au moins un logement de rouleau (70) entre la position d'approvisionnement et la position d'équipement.

5. Dispositif d'approvisionnement selon l'une quelconque des revendications 1 à 4, **caractérisé en ce qu'**il inclut un entraînement de dispositif de maintien qui est prévu pour déplacer au moins un dispositif de maintien (80) perpendiculairement au plan de rouleau.

6. Dispositif d'approvisionnement selon l'une quelconque des revendications 1 à 5, **caractérisé en ce qu'**au moins un dispositif de maintien (80) inclut des moyens de liaison autobloquants (84) pour relier le dispositif de maintien (80) de manière autobloquante au logement de rouleau (70) perpendiculairement au plan de rouleau.

7. Dispositif d'approvisionnement selon l'une quelconque des revendications 1 à 6, **caractérisé en ce qu'**il inclut en outre un dispositif de transfert qui est prévu pour transférer une extrémité libre d'un matériau de revêtement logé dans le dispositif d'approvisionnement à un dispositif d'alimentation d'une machine.
